# FASCICULE DE BREVET EUROPEEN

(11) **EP 2 738 088 B1**
(45) Date de publication et mention de la délivrance du brevet: **25.04.2018**
(21) Numéro de dépôt: 13194755.8
(22) Date de dépôt: 28.11.2013
(51) Int. Cl.: B64C 25/10

(54) **Dispositif de fixation intermédiaire entre un fuselage d'aéronef et un train d'atterrissage d'aéronef**
Verbindungsstück zwischen einem Flugzeugrumpf und einem Flugzeugfahrwerk
Device for intermediate fastening between an aircraft fuselage and an aircraft undercarriage

(30) Priorité: 30.11.2012 FR 1261473
(43) Date de publication de la demande: 04.06.2014
(73) Titulaire: Airbus Operations, 31060 Toulouse (FR)
(72) Inventeur: Bellet, Daniel, 31470 SAINT-LYS (FR); Gallant, Guillaume, 31480 LAREOLE (FR)
(74) Mandataire: Santarelli

(56) Documents cités:
- FR-A- 1 240 657
- FR-A1- 2 897 591
- GB-A- 448 983
- US-A- 2 351 215
- US-A- 2 752 112
- US-A- 2 973 168
- US-A- 5 435 504

## Description

L'invention est relative à un dispositif de fixation intermédiaire entre un fuselage d'aéronef et un train d'atterrissage d'aéronef.

De façon générale, le ou les trains d'atterrissage d'un aéronef sont logés dans une case de train située dans un espace réservé, nommé travée de train, situé dans les flancs de la partie basse du fuselage et pouvant s'étendre jusqu'à une partie de la voilure.

Cette case exerce une double fonction selon que l'aéronef soit en vol ou au sol.

Au cours du vol, la case isole le train des écoulements aérodynamiques de manière à augmenter les performances de l'aéronef.

Au sol, elle a pour rôle de transmettre les efforts induits par le train d'atterrissage à la structure du fuselage.

Actuellement, les éléments constitutifs du train d'atterrissage sont reliés au fuselage par l'intermédiaire de sa peau dans des zones rigides, et/ou au plafond de la case de train d'atterrissage constituant la limite entre la zone pressurisée (cabine) et la zone non pressurisée du fuselage.

Dans les structures d'aéronef de l'art antérieur, au cours du roulage de l'aéronef sur le sol, ce sont aux paliers des articulations du train d'atterrissage que sont transmis les efforts venant des roues.

Ces articulations étant reliées, d'une part, à la peau du fuselage de l'aéronef, et, d'autre part, au plafond de la travée du train d'atterrissage, ce sont la peau et la travée qui transmettent les efforts induits par le train d'atterrissage à la structure du fuselage.

De ce fait, les zones concernées de la peau et de la travée se doivent d'être renforcées pour ne pas subir des déformations trop importantes.

En particulier, le plafond de la travée se doit de supporter le moment de torsion local appliqué au plafond de la travée par la contrefiche.

Par ailleurs, à l'heure actuelle, du fait de leur structure et de leur fixation, les trains d'atterrissage d'un aéronef sont montés très tôt dans la chaîne de montage de l'aéronef. Ils ne peuvent donc pas être testés de façon indépendante.

En outre, ces trains sont très dépendants de la structure de la case. Il y a donc actuellement très peu de flexibilité quant au montage du train d'atterrissage.

Le document US2752112 divulgue un train d'atterrissage pour aéronef comportant un support central supportant une paire de roues rétractables.

L'invention se propose d'apporter des améliorations aux structures avant d'aéronef munies de train d'atterrissages telles qu'exposées ci-dessus.

A cet effet, elle concerne un dispositif de fixation intermédiaire entre un fuselage d'aéronef et un train d'atterrissage droit et un train d'atterrissage gauche d'aéronef, le train d'atterrissage étant apte à pivoter autour d'au moins un axe principal et à s'articuler autour d'au moins une articulation de contrefiche, pour permettre le déploiement ou la rétractation du train et comprenant une jambe portant des roues qui est reliée à l'axe principal et une contrefiche reliant la jambe à l'articulation de contrefiche.

Le dispositif de fixation intermédiaire est composé d'une structure de support droite et d'une structure de support gauche, lesdites structures de support comprenant chacune des premiers moyens de support destinés à recevoir ledit au moins un axe principal et des seconds moyens de support destinés à recevoir ladite au moins une articulation de contrefiche du train d'atterrissage droit, respectivement gauche. La structure de support droite et la structure de support gauche sont reliées entre elles par un caisson central destiné à être transversal à un axe longitudinal d'un aéronef une fois monté sur ledit aéronef, le caisson central comprenant une paroi frontale, une paroi postérieure et des parois de liaison reliant ces deux parois.

Plus particulièrement, l'articulation de contrefiche peut être une rotule ou un axe selon le type de train d'atterrissage utilisé.

Un avantage d'un tel dispositif de fixation intermédiaire est de transférer les efforts induits lors du roulage par les roues du train d'atterrissage au fuselage sans avoir à renforcer (et donc alourdir) la structure du fuselage, la majeure partie de ces efforts étant repris par le dispositif de fixation intermédiaire.

Un second avantage du dispositif réside dans le fait que l'ensemble composé du dispositif de fixation intermédiaire et du train d'atterrissage est totalement indépendant de l'aéronef qui est prête à poser ou « en kit » à tout moment de l'assemblage.

De ce fait, il est possible de mettre en place le train d'atterrissage à n'importe quel moment de l'assemblage, par exemple en toute fin de ce dernier.

Par ailleurs, une telle disposition rend le montage du train d'atterrissage plus rapide et plus simple.

De plus, le montage de l'ensemble composé du dispositif de fixation intermédiaire et du train d'atterrissage peut se faire de façon indépendante du reste du montage des éléments de l'aéronef.

L'indépendance conférée par le dispositif de fixation intermédiaire permet également de réaliser des tests des systèmes inhérents au train d'atterrissage de façon indépendante et/ou en parallèle avec l'assemblage du reste des éléments constitutifs de l'aéronef.

Une fois monté sur l'aéronef, le caisson central est destiné à être transversal à l'axe longitudinal de l'aéronef.

Plus particulièrement, le caisson central relie les voiles de chaque paire qui comprennent les seconds moyens de support.

Le caisson central est avantageusement dimensionné de manière à ce que sa structure reprenne une partie des efforts induits par les roues du train d'atterrissage sur la jambe et la contrefiche.

Ceci permet de réduire encore le renforcement de la structure du fuselage et donc sa masse.

Par ailleurs, on obtient ainsi un ensemble indépendant portant à lui seul les trains d'atterrissage d'un aéronef, ce qui facilite encore le montage et le démontage.

On entend ici par « indépendant » le fait que toutes les interfaces de fixation du train d'atterrissage se rattachent au dispositif de fixation intermédiaire, et pas à une autre pièce ou élément de l'aéronef.

Ainsi, le démontage du train d'atterrissage se fait par le biais du dispositif de fixation intermédiaire uniquement.

En effet, on réduit ainsi le nombre d'interfaces avec le fuselage ce qui permet d'obtenir une meilleure maitrise des tolérances nécessaires lors du montage et de simplifier les opérations de maintenance.

Un tel choix de structure permet au caisson central de remplir efficacement sa fonction de reprise des efforts sans trop alourdir la masse de l'aéronef. Selon une caractéristique possible, ladite au moins une structure de support est creuse. Ceci permet notamment de réduire la masse du dispositif de fixation intermédiaire et de loger des équipements dans l'espace interne de la structure de support.

Selon une caractéristique possible, l'ensemble composé des structures de support et du caisson central sont faits d'une seule pièce.

Ceci simplifie le montage du dispositif de fixation intermédiaire sur un fuselage d'aéronef.

Pour ne pas alourdir la masse du dispositif de fixation intermédiaire, le caisson central est creux.

De façon avantageuse, le caisson central présente un espace interne destiné à la mise en place de moyens de mise en mouvement de la jambe et de la contrefiche pour le déploiement et la rétractation du train.

De préférence, cet espace est situé entre les deux structures de support, au centre du caisson. Il contient par exemple les systèmes de motorisation et les vérins hydrauliques ou électriques permettant la mise en mouvement du train d'atterrissage.

Plus précisément, cet espace peut être parallélépipédique.

Afin de transmettre les efforts de roulage le plus directement possible vers les éléments les plus robuste du fuselage d'aéronef, les premiers et seconds moyens de support sont destinés, lorsque le dispositif de fixation est monté sur un fuselage d'aéronef, à se trouver au voisinage immédiat de la ligne de référence du fuselage d'aéronef (ou ligne neutre).

Ainsi, les efforts induits lors du roulage sont transmis au fuselage de façon tangente à la peau du fuselage.

Une telle caractéristique a également pour conséquence de diminuer la valeur du moment de flexion local (autour de l'axe longitudinal de l'aéronef) s'exerçant sur les points de jonction du fuselage avec les axes du train sous l'effet des efforts transmis par les roues.

La réduction de la valeur de ce moment permet de réduire la masse des zones concernées de la peau du fuselage ou du plafond de la case de train, qui dans l'art antérieur nécessitaient un renforcement.

Selon une caractéristique possible, ladite au moins une structure de support comprend une paires de voiles sensiblement parallèles entre eux, les premiers moyens de support et les seconds moyens de support étant portés par cette paire de voiles.

Selon une caractéristique possible, les voiles sont espacés l'un de l'autre de manière à pouvoir accueillir, dans l'espace ainsi formé, la contrefiche et une majeure partie de la jambe.

L'ensemble composé du dispositif de fixation intermédiaire et du train d'atterrissage est ainsi plus compact.

Selon une caractéristique possible, les moyens de support sont des paliers percés dans les voiles.

De cette manière, l'axe principal et l'articulation de contrefiche peuvent venir s'y insérer et y pivoter/s'articuler.

Selon une caractéristique possible, le dispositif comprend en outre des moyens d'interface destinés à relier ladite au moins une structure de support et le fuselage, et à être fixés sensiblement au niveau de la ligne de référence du fuselage d'aéronef.

On rappelle que la ligne de référence du fuselage, ou ligne de référence du revêtement (peau du fuselage), ou encore ligne neutre du fuselage est constituée de barycentres de toutes les sections du revêtement du fuselage.

Avantageusement, les moyens d'interface comprennent au moins une pièce d'interface destinée à être fixée, à l'aide de boulons, au fuselage d'aéronef d'une part et à ladite au moins une structure de support d'autre part.

L'invention concerne également un ensemble comprenant un train d'atterrissage d'aéronef et un dispositif selon l'invention.

L'invention concerne également un ensemble comprenant deux trains d'atterrissage d'aéronef et un dispositif selon l'invention comprenant deux structures de support et un caisson central.

Toutefois, il est également possible d'envisager deux dispositifs à une paire de structures de support indépendantes l'une de l'autre.

L'invention concerne également un aéronef comprenant un des ensembles précités.

De manière avantageuse, un tel aéronef est muni d'une case de train d'atterrissage comprenant un plafond comprenant un voile comportant des éléments de renforcement ou diaphragmes, s'étendant dans la direction longitudinale de l'aéronef (axe X du repère de l'aéronef).

L'invention est en effet particulièrement adaptée aux fuselages présentant des structures de ce type, à la fois légères et résistantes.

La case de train d'atterrissage peut à cet égard comprendre, en combinaison ou de manière indépendante, une cloison de pressurisation arrière comprenant un voile et des éléments de renforcement ou diaphragmes.

D'autres caractéristiques et avantages apparaitront au cours de la description qui va suivre, donnée à titre d'exemple non limitatif et faite en référence aux dessins annexés, sur lesquels :
- la figure 1 est une représentation schématique en perspective du dispositif de fixation intermédiaire dans un premier mode de réalisation ;
- la figure 2a est une représentation schématique en perspective du dispositif de fixation intermédiaire de la figure 1 et de deux trains d'atterrissage avec lesquels il coopère, les trains d'atterrissage étant en position déployée.
- la figure 2b est une représentation schématique en perspective des éléments de la figure 2a, les trains d'atterrissage étant en position rétractée.
- la figure 3 est une représentation schématique en perspective d'un tronçon de fuselage d'aéronef muni du dispositif de fixation intermédiaire et des trains d'atterrissage de la figure 2a ;
- la figure 4 est une représentation en coupe des éléments de la figure 3;
- la figure 5a est une représentation schématique des éléments de la figure 3 selon un angle différent ;
- la figure 5b est une représentation schématique des éléments de la figure 5a, le train d'atterrissage étant en position rétractée ;
- la figure 6 est un agrandissement d'un détail de la figure 3, la paroi latérale gauche de la travée de l'aéronef étant dissimulée ;
- la figure 7 est un agrandissement d'un détail de la figure 6, la paroi latérale gauche de la travée de l'aéronef n'étant pas dissimulée ; et
- la figure 8 est un agrandissement d'un détail de la figure 6.

Dans la description qui suit, les orientations correspondront à celles d'un aéronef au sol sur un sol plat.

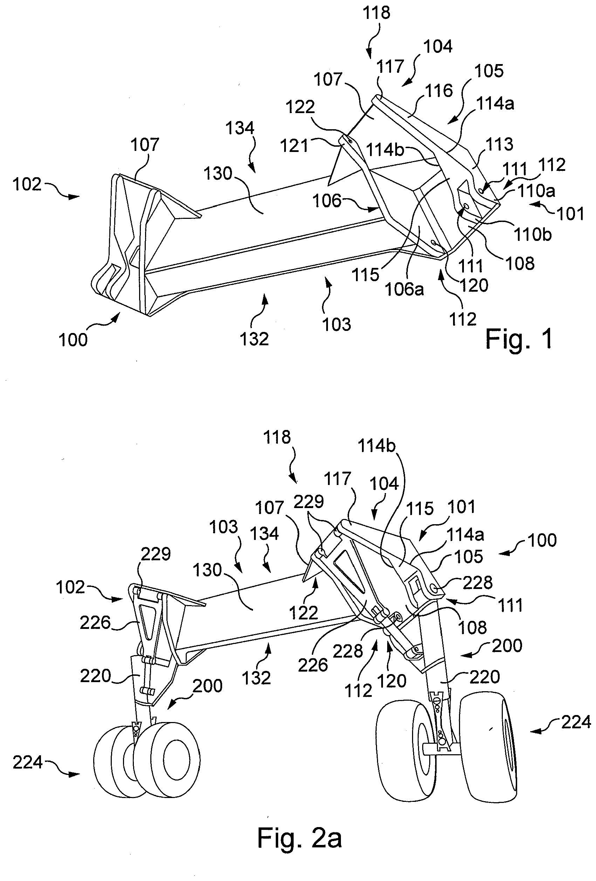

La figure 1 représente un dispositif de fixation intermédiaire selon l'invention dans un premier mode de réalisation.

Le dispositif de fixation intermédiaire 100 en question comprend trois parties: une structure de support droite 101 (le terme droit se référant à l'orientation de la figure), une structure de support gauche 102 et un caisson central 103 reliant les deux structures de support.

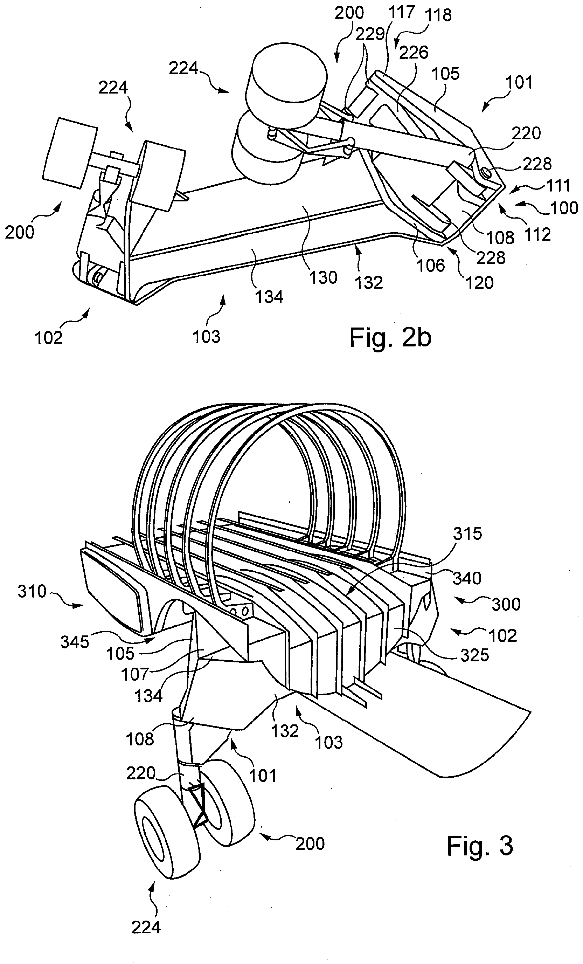

On notera que dans toute la description, les termes « gauche » et « droite » qualifiant les éléments référencés se rapporteront à l'orientation de la figure 2 telles que définies ci-dessus, et ce quel que soit l'orientation du dispositif dans les autres figures.

Le dispositif de fixation intermédiaire 100 étant, dans le mode de réalisation présenté dans cette figure et les suivantes, symétrique par rapport au centre du caisson central 103, on ne décrira en détail que la structure de support droite 101.

La structure de support droite 101 comprend une paire de voiles 104. Cette paire de voiles 104 est composée d'un voile externe 105 et un voile interne 106, sensiblement parallèles entre eux. Les termes interne et externe sont ici relatifs à la position des voiles par rapport au caisson central 103 ou encore par rapport au fuselage auquel le dispositif est destiné à être fixé.

Il comprend également un voile de toit 107 reliant les voiles interne 106 et externe 105 entre eux au niveau de leur extrémité supérieure. Le terme supérieur se rapporte ici, soit au côté des voiles le plus proche du fuselage, soit du côté opposé au train d'atterrissage.

Le voile droit 101 comprend un voile de fond 108 reliant entre elles les voiles interne 106 et externe 105. Les surfaces du voile de fond 108 et celles du voile de toit 107 forme entre elles un angle obtus.

Les quatre éléments précités, à savoir la paire de voiles 104, le voile de toit 107 et le voile de fond 108 forment ainsi l'enveloppe extérieure de la structure de support droite 101.

Il est toutefois possible de conférer une forme alternative aux structures de support droite 101 ou gauche 102 en faisant par exemple varier l'angle entre les voiles externe 105 et interne 106 et le voile de toit 107, ou encore l'angle entre les voiles interne 106 et externe 105 qui peuvent ne pas être tout à fait parallèles, sans remettre en cause le principe de l'invention.

Dans tous les cas, on adaptera avantageusement la forme de la structure de support à l'aéronef à laquelle elle est destinée à être fixée d'une part, mais aussi au train d'atterrissage qu'elle est destinée à soutenir d'autre part comme on le verra plus loin.

On va maintenant décrire plus en détail la forme et la fonction de la paire de voiles 104 du voile de toit 107 et du voile de fond 108.

Le voile externe 105 présente une paire de ferrures externe 110a et interne 110b s'étendant dans la direction normale au voile de fond 108 en prenant une forme triangulaire. Les ferrures externe 110a et interne 110b forment à elles deux une fourche à deux branches (ou mâchoire).

Ces ferrures externe 110a et interne 110b comprennent chacune, à leur extrémité destinée à être la plus proche du train d'atterrissage, un palier externe de jambe 111. Ces paliers externes de jambe 111 sont situés en regard l'un de l'autre.

Les paliers externes de jambe 111 font partie, comme on le verra plus loin, de premiers moyens de support 112 destinés à recevoir un axe principal d'une jambe de train d'atterrissage.

Le voile externe 105 se prolonge, à partir de l'extrémité de la paire de ferrures 110a, 110b opposée aux paliers externes de jambe 111, tout en gagnant en largeur du côté des ferrures 110a, 110b.

Cet élargissement 113 se fait en suivant deux arêtes externe 114a et interne 114b. Ces arêtes externe 114a et interne 114b partent respectivement de la ferrure externe 110a et de la ferrure interne 110b et se prolongent vers le voile de toit 107 en se rapprochant l'une de l'autre.

Les arêtes externe 114a et interne 114b font chacune, respectivement, un angle obtus avec la ferrure externe 110a et la ferrure interne 110b.

L'élargissement 113 forme ainsi une niche 115. La limite entre les ferrures 110a, 110b et l'élargissement 113 est de ce fait matérialisée par une arête forte.

La forme et la taille de la niche 115 sont notamment liées, comme on peut le voir à la figure 2b, au fait de pouvoir permettre la rétractation du train d'atterrissage de manière à ce qu'une majeure partie de la jambe puisse être contenue dans l'espace entre les voiles interne 106 et externe 105.

Avant que ces arêtes 114a, 114b ne se rejoignent, l'arête interne 114b change de direction de manière à être parallèle à l'arête externe 114a.

Le voile externe 105 se prolonge alors, toujours en gagnant en largeur du côté des ferrures 110a, 110b mais en perdant en épaisseur par rapport à l'élargissement 113 de façon à former une pointe 116.

L'extrémité de la pointe 116 qui est opposée aux ferrures 110a, 110b présente un palier externe de contrefiche 117 faisant partie, comme on le verra plus loin, de seconds moyens de support 118 destinés à recevoir une articulation de contrefiche d'une contrefiche de train d'atterrissage.

Le voile interne 106 présente quant à lui une surface principale 106a en forme de trapèze. Cette surface principale 106a est sensiblement parallèle à la direction d'allongement du voile externe 105.

Au coin inférieur 119 de la surface principale 106a, celui situé en regard des ferrures 110a, 110b, se trouve un palier interne de jambe 120 qui est aligné avec les paliers externes de jambe 111.

Le palier interne de jambe 120 constitue, avec les paliers externes de jambe 111, les premiers moyens de support 112.

Le voile interne 106 présente également un taquet 121 qui prolonge la surface principale 106a. Le taquet 121 forme un angle par rapport à la surface principale 106a en s'éloignant du voile externe 105.

Le taquet 121 présente un palier interne de contrefiche 122. Le palier interne de contrefiche fait partie des seconds moyens de support 118 en combinaison avec le palier externe de contrefiche 117.

Enfin, le voile de fond 108 relie les deux voiles interne 106 et externe 105 en étant perpendiculaire à la surface principale 106a d'une part, et aux ferrures externe et interne 110a, 110b, d'autre part.

On va maintenant décrire le caisson central 103 ainsi que sa fixation à la structure de support gauche 102 et à la structure de support droite 101.

Le caisson central 103 est creux, sa section comprenant quatre côtés.

Plus particulièrement, le caisson central comprend une paroi frontale 130, une paroi postérieure 132, et des parois de liaison 134 reliant ces deux parois.

Les parois frontale 130 et postérieure 132 sont, dans le mode de réalisation représenté dans ces figures, sensiblement parallèles. Il est toutefois possible, sans que cela ne remette en cause leurs fonctions, qu'elles forment un angle entre elles.

Les parois de liaison 134 sont ici sensiblement perpendiculaires aux parois frontale 130 et postérieure 132. Toutefois, il est tout à fait envisageable que ces parois forment entre elles un angle différent.

Ainsi, les parois de liaison 134 et les parois frontale 130 et postérieure 132 forment l'enveloppe du caisson central de manière à lui conférer une forme longitudinale. En l'occurrence, cette forme est celle d'un parallélépipède.

Dans le mode de réalisation particulier correspondant aux figures, les parois frontale 130 et postérieure 132 s'étendent de part et d'autre de chacune des structures de support droite 101 et gauche 102. La largeur des parois frontale 130 et postérieure 132 n'excède par ailleurs pas la hauteur des structures de support droite 101 et gauche 102.

Pour permettre la fixation du caisson central 103 aux structures de support droite 101 et gauche 102, le voile de toit 107 se prolonge, tout en restant plan, jusqu'à la surface de la paroi frontale 130.

La paroi frontale 130 est quant à elle reliée directement au voile interne 106.

Enfin, la paroi postérieure 132 est reliée au voile de fond 108 des structures de support droite 101 et gauche 102.

Alternativement, l'ensemble composé des structures de support droite 101 et gauche 102 et du caisson central 103 peut être fait d'une seule pièce.

On notera que quel que soit sa forme, le caisson central 103 s'adaptera à la géométrie ou la configuration de la travée de train d'atterrissage de l'aéronef concerné ainsi que des structures de support droite 101 et gauche 102.

Le fait de relier les structures de support droite 101 et gauche 102 permet notamment au caisson central 103 de recevoir, d'une part, et de répartir, d'autre part, les efforts reçus par chacune des structures de support droite 101 et gauche 102.

En outre, le caisson central 103 étant creux, il peut constituer un espace interne (logement) dans laquelle sont disposés par exemple des moyens de mise en mouvement (non représentés) de la jambe et de la contrefiche du train d'atterrissage pour le déploiement ou la rétractation du ou des trains d'atterrissage.

Il peut s'agir d'équipements tels que des vérins, des éléments d'alimentation électrique, des moteurs, des actionneurs, etc.

On va maintenant décrire, en référence aux figures 2a et 2b, la coopération entre le dispositif de fixation intermédiaire 100 et deux trains d'atterrissage 200.

Les trains d'atterrissage 200 comprennent chacun une jambe 220 munie à une extrémité de roues 224 et d'une contrefiche 226 en forme de Y.

La jambe 220 est reliée à son extrémité opposée aux roues 224 à deux axes dit axes principaux 228. Ces axes principaux 228 ont sensiblement la même direction que l'axe de tangage de l'aéronef.

La contrefiche 226, quant à elle, est reliée à son extrémité la plus proche de la roue à la jambe 220. A son autre extrémité où elle se divise en deux branches de Y, elle est reliée à deux articulations de contrefiche 229.

Les articulations de contrefiche 229 sont par exemple des rotules ou des axes. Il s'agit, dans le mode de réalisation présenté sur les figures, de rotules.

Les axes principaux 228 et les articulations de contrefiche 229 permettent de faire pivoter la jambe 222 autour de l'axe de tangage de l'aéronef de manière à faire passer le train d'atterrissage 200 d'une position déployée telle que celle de la figure 2a, à une position rétractée dans laquelle le train est confiné en position sensiblement horizontale (position horizontale de l'aéronef lorsqu'il est au sol) telle que celle de la figure 2b.

Les deux axes principaux 228 de la jambe 220, viennent s'insérer dans les premiers moyens de support 112, autrement dit respectivement dans le palier interne de jambe 120 d'une part, et dans les paliers externes de jambe 111 d'autre part.

Par ailleurs, les articulations de contrefiche 229, qui sont situées chacune à l'extrémité des branches du Y formé par la contrefiche 226, viennent s'insérer dans les seconds moyens de support 118, autrement dit respectivement dans le palier interne de contrefiche 122 d'une part et dans le palier externe de contrefiche 117 d'autre part.

Grâce à ces dispositions, les efforts induits lors du roulage par les roues 224 sur les articulations de contrefiche 229 et les axes principaux 228 sont repris par les premiers et seconds moyens de support 112, 118.

Ces efforts sont de fait transférés à toute la structure de support 101, qui les transfère à son tour au caisson central.

Plus particulièrement, les efforts tranchants seront repris par le voile de fond 108 et le voile de toit 107, puis transmis aux parois frontale 130, postérieure 132 et de liaison 134.

Comme on peut mieux le voir sur la figure 2b où les trains d'atterrissage sont en position rétractée, la distance entre le voile interne 106 et le voile externe 105 est avantageusement choisie de manière à pouvoir accueillir dans l'espace formé entre ces deux voiles, toute la contrefiche 226.

De plus, comme on peut le voir sur la figure 2b où les trains d'atterrissage 200 sont en position rétractée, la distance entre le voile interne 106 et le voile externe 105 est avantageusement choisie de manière à pouvoir accueillir, dans l'espace formé entre ces deux voiles, la majeure partie de la jambe 220.

De même, la forme et la taille de la niche 115 ont été choisies de manière à ce que la jambe 220 vienne l'effleurer.

Les dimensions des structures de support droite et gauche 101, 102 sont également choisies de manière à ne pas dépasser la longueur de la jambe 220 pour que, dans la position rétractée du train d'atterrissage 200, les roues 224 ne touchent pas les voiles externe 105 et interne 106.

Les figures 3, 4, 5a et 5b, 6, 7 et 8 illustrent la façon dont le dispositif de fixation intermédiaire peut être intégré dans un tronçon d'aéronef. On notera que les ailes de l'aéronef ne sont représentées sur aucune de ces figures pour des raisons de clarté.

Le tronçon de fuselage en question n'étant pas propre à l'invention, on ne décrira pour celui-ci que les éléments utiles à son interface avec le dispositif intermédiaire de fixation 100.

Le tronçon de fuselage 300 comprend une travée de train d'atterrissage 310, qui comprend elle-même un plafond de travée 315 et une cloison de pressurisation arrière 325.

Par exemple, le plafond de travée 315 et la cloison de pressurisation arrière 325 sont chacun composés d'un voile renforcé par des renforts ou diaphragmes, de manière à réduire leur masse tout en conservant la résistance nécessaire.

Le dispositif de fixation intermédiaire 100 comprend des moyens d'interface 330 lui permettant d'être relié au tronçon de fuselage 300. Ces moyens d'interface 330 sont fixés sensiblement, au niveau de la ligne de référence (ligne neutre) du revêtement (de la peau) du fuselage. La ligne de référence du fuselage est constituée des barycentres de toutes les sections du revêtement (de la peau) du fuselage.

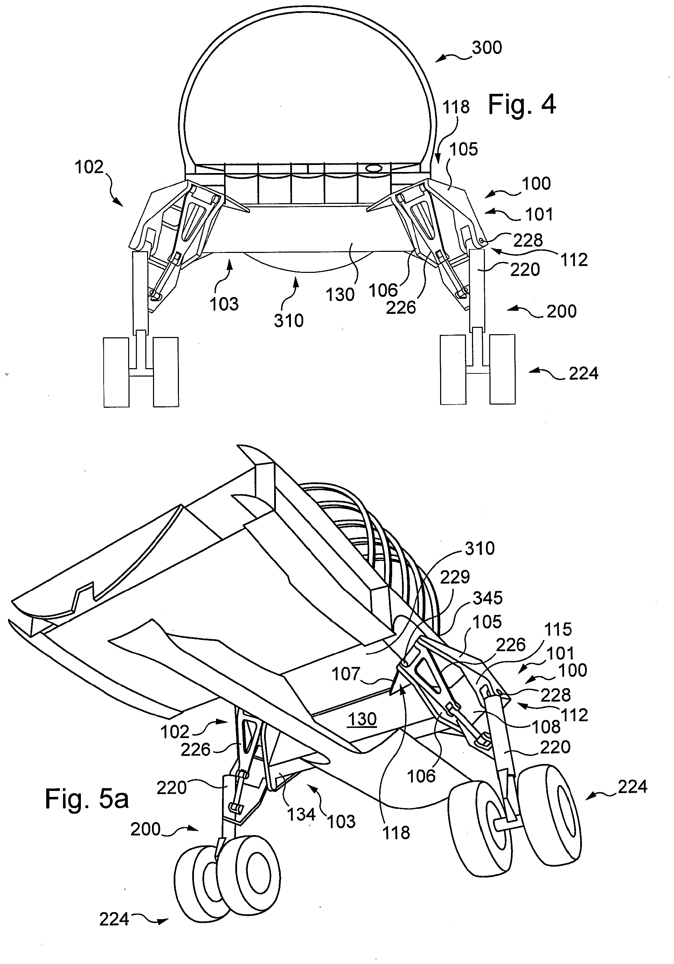

De façon plus précise, comme on peut le voir sur la figure 4, la structure de support gauche 101 est reliée à la paroi latérale gauche 340 de la travée et la structure de support droite 102 à la paroi latérale droite 345 de la travée.

La fixation de chaque structure de support gauche 102 et droite 101 se fait respectivement au niveau de la partie inférieure de chaque paroi latérale de travée gauche 340 et droite 345, au plus près de la ligne de référence du fuselage.

Pour une fixation permettant le meilleur transfert d'efforts induits par le roulage au tronçon du fuselage 300 et limiter les déformations, le point de fixation avant 347 est par exemple situé à l'extrémité de la pointe 116 du voile externe 105.

Toujours pour mettre le meilleur transfert d'efforts, le point de fixation arrière 348 est situé au niveau de l'extrémité externe (par rapport au tronçon de fuselage 300) du voile de toit 107.

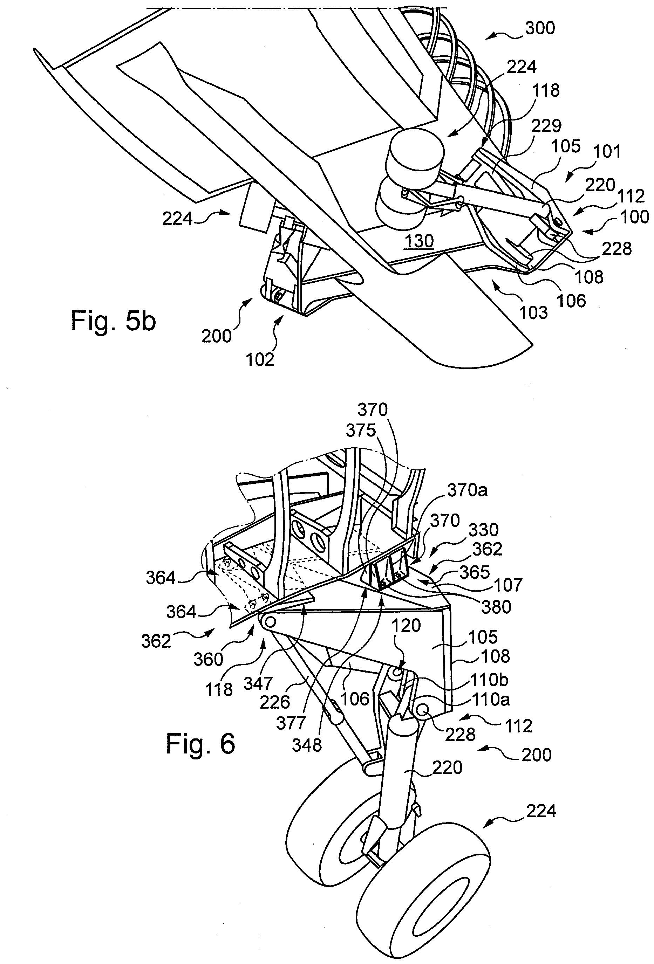

En particulier, comme on peut le voir sur les figures 6, 7 et 8, les moyens d'interface 330 comprennent ici une pièce d'interface avant 360 et une pièce d'interface arrière 365.

Pour des raisons de clarté, la paroi latérale de travée droite 345 n'apparaît que sur la figure 6.

On notera ici que les termes avant et arrière sont relatifs à la position du dispositif de fixation intermédiaire 100 une fois ce dernier monté sur un aéronef. En effet, la pièce d'interface avant 360 est alors la plus proche de l'avant de l'aéronef tandis que la pièce d'interface arrière 365 est la plus proche de l'arrière de l'aéronef.

Les pièces d'interface avant 360 et arrière 365 sont toutes deux fixées d'une part à la structure de support droite 101, et d'autre part au tronçon de fuselage de l'aéronef 300, par des boulons 362.

Il peut notamment s'agir de boulons de traction ou de cisaillement. Dans un autre mode de réalisation non représenté, la fixation peut s'effectuer par chape et manille.

Plus particulièrement, la pièce d'interface avant 360 est une plaque s'étendant sur environ un tiers de la longueur du voile de toit 107, et sur toute la largeur de la structure de support droite 101.

Des premiers boulons de pièce d'interface avant 364, fixent la pièce d'interface avant 360 au tronçon de fuselage d'aéronef 300 au niveau du point de fixation avant 347.

Deux premiers boulons de pièce d'interface avant 364 sont situés, de chaque côté de la pièce d'interface avant 360, à l'extrémité avant de la pièce d'interface avant 360.

Les premiers boulons de pièce d'interface avant 364 sont donc au nombre de quatre.

Ce nombre ainsi que la disposition des boulons peut toutefois naturellement varier.

La pièce d'interface arrière 365 est composée d'une équerre externe 370 et d'une équerre interne 375 (visible uniquement sur la figure 6) disposées dos à dos avec un espace 377 entre elles.

L'équerre externe 370, creuse, est renforcée par une âme 370a qui la divise en deux parties identiques.

Il en est de même pour l'équerre interne 375 qui est renforcée par une âme (non visible sur les figures).

L'équerre externe 370 est fixée à la structure de support droite 101 par des boulons de pièce d'interface arrière 380.

Pour cela, les boulons de pièce d'interface arrière 380 traversent la base 370b de l'équerre externe 370 d'une part, et le voile de toit 107 d'autre part au niveau du point de fixation arrière 350.

Il en est de même pour l'équerre interne qui est fixée à la fixée à la structure de support droite 101 par des boulons (non visibles sur les figures).

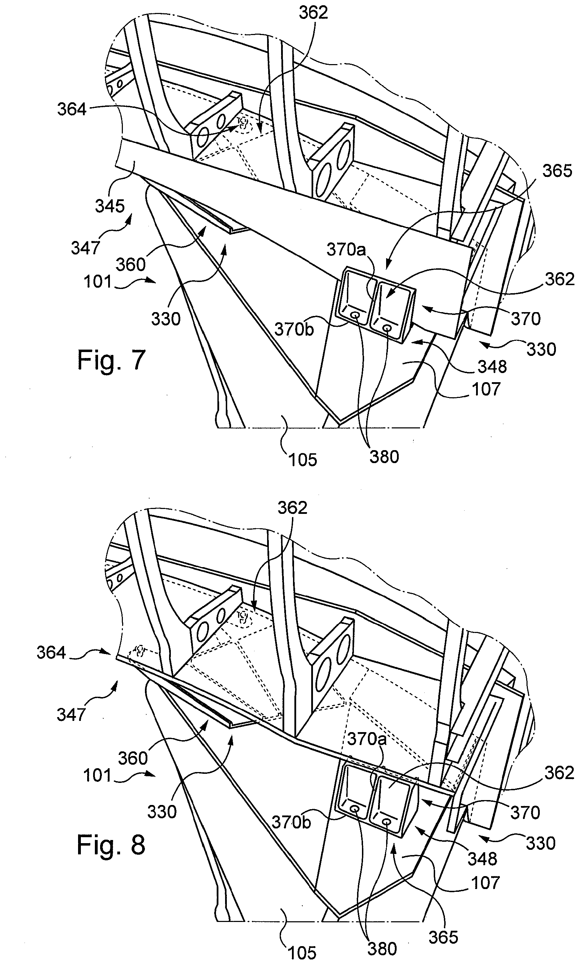

L'espace 377 est comblé, lors de la pose du dispositif de fixation intermédiaire 100 sur l'aéronef, par la paroi latérale de travée gauche 340, comme on peut le voir sur la figure 7 qui illustre la coopération entre la pièce d'interface arrière 360 et le tronçon de fuselage d'aéronef 300.

Les équerres externe 370 et interne 375 sont par exemple fixées à la paroi latérale gauche 340 à l'aide de moyens de fixation tels que des boulons (non représentés), ou encore sont intégrés à la paroi latérale gauche 340.

Les exemples qui viennent d'être décrits ne sont que des modes de réalisation possibles de l'invention, qui ne s'y limite pas.

## Revendications

1. Dispositif de fixation intermédiaire entre un fuselage d'aéronef et un train d'atterrissage droit et un train d'atterrissage gauche d'aéronef (200), chaque train d'atterrissage (200) étant apte à pivoter autour d'au moins un axe principal (228) et à s'articuler autour d'au moins une articulation de contrefiche (229), pour permettre le déploiement ou la rétractation du train et comprenant une jambe (220) portant des roues (224) qui est reliée à l'axe principal (228) et une contrefiche (226) reliant la jambe (220) à l'articulation de contrefiche (229), le dispositif de fixation intermédiaire étant composé d'une structure de support droite (101) et d'une structure de support gauche (102), lesdites structures de support comprenant chacune des premiers moyens de support (112) destinés à recevoir ledit au moins un axe principal (228) et des seconds moyens de support (118) destinés à recevoir ladite au moins une articulation de contrefiche (229) du train d'atterrissage droit, respectivement gauche, la structure de support droite (101) et la structure de support gauche (102) étant reliées entre elles par un caisson central (103) destiné à être transversal à un axe longitudinal de l'aéronef une fois monté sur ledit aéronef, le caisson central comprenant une paroi frontale (130), une paroi postérieure (132) et des parois de liaison (134) reliant ces deux parois.

2. Dispositif selon la revendication 1, **caractérisé en ce que** ladite au moins une structure de support (101 ; 102) est creuse.

3. Dispositif selon l'une des revendications 1 ou 2, **caractérisé en ce que** l'ensemble composé des structures de support (101 ; 102) et du caisson central (103) est fait d'une seule pièce.

4. Dispositif selon l'une des revendications 1 à 3, **caractérisé en ce que** le caisson central (103) est creux.

5. Dispositif selon l'une des revendications 1 à 4, **caractérisé en ce que** le caisson central (103) présente un espace interne destiné à la mise en place de moyens de mise en mouvement de la jambe (220) et de la contrefiche (226) pour le déploiement et la rétractation du train (200).

6. Dispositif de fixation selon l'une des revendications 1 à 5, **caractérisé en ce que** les premiers et seconds moyens de support (112, 118) sont destinés, lorsque Je dispositif est monté sur un fuselage d'aéronef (300), à se trouver au voisinage immédiat de la ligne de référence du fuselage d'aéronef (300).

7. Dispositif selon l'une des revendications 1 à 6, **caractérisé en ce que** ladite au moins une structure de support (101 ; 102) comprend en outre une paire de voiles (104) sensiblement parallèles entre eux, les premiers moyens de support (112) et les seconds moyens de support (118) étant portés par cette paire de voiles (104).

8. Dispositif selon la revendication 7, **caractérisé en ce que** les voiles (105, 106) de la paire (104) sont espacés l'un de l'autre de manière à pouvoir accueillir, dans l'espace ainsi formé, la contrefiche (226) et la majeure partie de la jambe (220).

9. Dispositif de fixation selon la revendication 7 ou 8, **caractérisé en ce que** les premiers et seconds moyens de support (112, 118) sont des paliers (111, 117, 120, 122) percés dans les voiles (105, 106).

10. Dispositif de fixation selon l'une des revendications 1 à 9, **caractérisé en ce qu'**il comprend en outre des moyens d'interface (360, 365) destinés à relier ladite au moins une structure de support (101 ; 102) et le fuselage de l'aéronef (300), et à être fixés sensiblement au niveau de la ligne de référence du fuselage d'aéronef.

11. Ensemble comprenant un train d'atterrissage d'aéronef (200) et un dispositif (100) selon la revendication 1.

12. Ensemble comprenant deux trains d'atterrissage d'aéronef (200) et un dispositif (100) selon l'une des revendications 1 à 5.

13. Aéronef comprenant un ensemble selon la revendication 11 ou 12.

## Patentansprüche

1. Zwischenbefestigungsvorrichtung zwischen einem Flugzeugrumpf und einem rechten und einem linken Flugzeugfahrwerk (200), wobei sich jedes Fahrwerk (200) um wenigstens eine Hauptachse (228) drehen kann und um wenigstens ein Strebengelenk (229) angelenkt ist, um das Ausfahren oder Einfahren des Fahrwerks zu ermöglichen, und einen Schenkel (220), der Räder (224) trägt, die mit der Hauptachse (228) verbunden sind, und eine Strebe (226), die den Schenkel (220) mit dem Strebengelenk (229) verbindet, aufweist, wobei die Zwischenbefestigungsvorrichtung aus einer rechten Tragstruktur (101) und einer linken Tragstruktur (102) gebildet ist, wobei die Tragstrukturen jeweils erste Tragmittel (112), die dazu bestimmt sind, die wenigstens eine Hauptachse (228) aufzunehmen, und zweite Tragmittel (118), die dazu bestimmt sind, das wenigstens eine Strebengelenk (229) des rechten bzw. linken Fahrwerks aufzunehmen, umfassen, wobei die rechte Tragstruktur (101) und die linke Tragstruktur (102) durch einen Mittelkasten (103) verbunden sind, der dazu bestimmt ist, transversal zu einer Längsachse des Flugzeugs zu verlaufen, sobald er am Flugzeug montiert ist, wobei der Mittelkasten eine vordere Wand (130), eine hintere Wand (132) und Verbindungswände (134), die diese beiden Wände verbinden, enthält.

2. Vorrichtung nach Anspruch 1, **dadurch gekennzeichnet, dass** die wenigstens eine Tragstruktur (101; 102) hohl ist.

3. Vorrichtung nach einem der Ansprüche 1 oder 2, **dadurch gekennzeichnet, dass** die Gesamtheit, die aus den Tragstrukturen (101; 102) und aus dem Mittelkasten (103) gebildet ist, einteilig ausgebildet ist.

4. Vorrichtung nach einem der Ansprüche 1 bis 3, **dadurch gekennzeichnet, dass** der Mittelkasten (103) hohl ist.

5. Vorrichtung nach einem der Ansprüche 1 bis 4, **dadurch gekennzeichnet, dass** der Mittelkasten (103) einen Innenraum aufweist, der dazu bestimmt ist, Mittel zum Bewegen des Schenkels (220) und der Strebe (226) zum Ausfahren und Einfahren des Fahrwerks (200) anzuordnen.

6. Befestigungsvorrichtung nach einem der Ansprüche 1 bis 5, **dadurch gekennzeichnet, dass** sich die ersten und zweiten Tragmittel (112, 118) dazu bestimmt sind, dann, wenn die Vorrichtung an einem Flugzeugrumpf (300) montiert sind, in direkter Umgebung der Referenzlinie des Flugzeugrumpfes (300) zu befinden.

7. Vorrichtung nach einem der Ansprüche 1 bis 6, **dadurch gekennzeichnet, dass** die wenigstens eine Tragstruktur (101; 102) außerdem ein Paar Flügel (104) umfasst, die im Wesentlichen zueinander parallel sind, wobei die ersten Tragmittel (112) und die zweiten Tragmittel (118) durch dieses Paar Flügel (104) getragen werden.

8. Vorrichtung nach Anspruch 7, **dadurch gekennzeichnet, dass** die Flügel (105, 106) des Paars (104) voneinander in der Weise beabstandet sind, dass sie in dem somit gebildeten Zwischenraum die Strebe (226) und den Hauptteil des Schenkels (220) aufnehmen können.

9. Befestigungsvorrichtung nach Anspruch 7 oder 8, **dadurch gekennzeichnet, dass** die ersten und zweiten Tragmittel (112, 118) Lager (111, 117, 120, 122) sind, durch die die Flügel (105, 106) verlaufen.

10. Befestigungsvorrichtung nach einem der Ansprüche 1 bis 9, **dadurch gekennzeichnet, dass** sie außerdem Schnittstellenmittel (360, 365) umfasst, die dazu bestimmt sind, die wenigstens eine Tragstruktur (101; 102) und den Flugzeugrumpf (300) zu verbinden und im Wesentlichen auf Höhe der Referenzlinie des Flugzeugrumpfes befestigt zu werden.

11. Gesamtheit, die ein Flugzeugfahrwerk (200) und eine Vorrichtung (100) nach Anspruch 1 umfasst.

12. Gesamtheit, die zwei Flugzeugfahrwerke (200) und eine Vorrichtung (100) nach einem der Ansprüche 1 bis 5 umfasst.

13. Flugzeug, das eine Gesamtheit nach Anspruch 11 oder 12 umfasst.

## Claims

1. A device for intermediate fastening between an aircraft fuselage and a right landing gear and a left landing gear of an aircraft (200), each landing gear (200) being adapted to pivot around at least one main shaft (228) and to be hinged around at least one stay joint (229), to enable the extension or the retraction of the gear and comprising a leg (220) bearing wheels (224) which is linked to the main shaft (228) and a stay (226) linking the leg (220) to the stay joint (229), the intermediate fastening device being composed of a right support structure (101) and a left support structure (102), said support structures each comprising first support means (112) intended to receive said at least one main shaft (228) and second support means (118) intended to receive said at least one stay joint (229) of the right, respectively left, landing gear, the right support structure (101) and the left support structure (102) being linked together by a central box structure (103) intended to be transverse to a longitudinal axis of the aircraft once mounted on said aircraft, the central box structure comprising a front wall (130), a rear wall (132) and linking walls (134) linking those two walls.

2. The device according to claim 1, wherein said at least one support structure (101; 102) is hollow.

3. The device according to one of claims 1 or 2, wherein the assembly composed of the support structures (101; 102) and of the central box structure (103) is made as a single piece.

4. The device according to one of claims 1 to 3, wherein the central box structure (103) is hollow.

5. The device according to one of claims 1 to 4, wherein the central box structure (103) has an internal space intended for the installation of means for imparting motion to the leg (220) and the stay (226) for the extension and the retraction of the gear (200).

6. The fastening device according to one of claims 1 to 5, wherein the first and second support means (112, 118) are intended, when the device is mounted on an aircraft fuselage (300), to be situated in the immediate neighborhood of the reference datum line of the aircraft fuselage (300).

7. The device according to one of claims 1 to 6, wherein said at least one support structure (101; 102) further comprises a pair of webs (104) which are substantially parallel to each other, the first support means (112) and the second support means (118) being carried by that pair of webs (104).

8. The device according to claim 7, wherein the webs (105, 106) of the pair (104) are spaced from each other so as to be able to receive, in the space so formed, the stay (226) and the major part of the leg (220).

9. The fastening device according to claim 7 or 8, wherein the first and second support means (112, 118) are bearings (111, 117, 120, 122) bored in the webs (105, 106) .

10. The fastening device according to one of claims 1 to 9, wherein it further comprises interface means (360, 365) intended to link said at least one support structure (101; 102) and the fuselage (300) of the aircraft, and to be fastened substantially at the location of the reference datum line of the aircraft fuselage.

11. An assembly comprising an aircraft landing gear (200) and a device (100) according to claim 1.

12. An assembly comprising two aircraft landing gears (200) and a device (100) according to one of claims 1 to 5.

13. An aircraft comprising an assembly according to claim 11 or 12.
